# EUROPEAN PATENT SPECIFICATION

(11) **EP 3 206 205 B1**
(45) Date of publication and mention of the grant of the patent: **15.01.2020**
(21) Application number: 15848463.4
(22) Date of filing: 30.09.2015
(51) Int. Cl.: G10L 17/04, G10L 17/22, G10L 15/26, G10L 17/00

(54) **VOICEPRINT INFORMATION MANAGEMENT METHOD AND DEVICE AS WELL AS IDENTITY AUTHENTICATION METHOD AND SYSTEM**
VERFAHREN UND VORRICHTUNG ZUR STIMMENAUSDRUCKSINFORMATIONSVERWALTUNG SOWIE IDENTITÄTSAUTHENTIFIZIERUNGSVERFAHREN UND -SYSTEM
PROCÉDÉ ET DISPOSITIF DE GESTION D'INFORMATIONS D'EMPREINTE VOCALE, ET PROCÉDÉ ET SYSTÈME D'AUTHENTIFICATION D'IDENTITÉ

(30) Priority: 10.10.2014 CN 201410532530
(43) Date of publication of application: 16.08.2017
(73) Proprietor: Alibaba Group Holding Limited, Grand Cayman (KY)
(72) Inventor: XIONG, Jian, Hangzhou Zhejiang 311121 (CN)
(74) Representative: Finnegan Europe LLP
(86) International application number: PCT/CN2015/091260
(87) International publication number: WO 2016/054991

(56) References cited:
- CN-A- 1 547 191
- CN-A- 1 852 354
- CN-A- 102 708 867
- CN-A- 102 760 434
- CN-A- 103 258 535
- US-A1- 2010 153 108
- US-A1- 2012 130 714
- US-A1- 2014 142 940
- US-B1- 7 158 776
- US-B1- 8 812 320

## Description

### Technical field

The present application relates to the technical field of voiceprint recognition, and in particular, to a voiceprint information management method and apparatus, and an identity authentication method and system.

### Background art

Voiceprint refers to a sound wave spectrum carrying verbal information displayed by an electro-acoustic instrument. The sound waves generated by different people speaking the same words are different, and the corresponding sound wave spectra, i.e., voiceprint information, are also different. Therefore, it can be determined by comparing voiceprint information whether the corresponding speakers are the same, i.e., identity authentication based on voiceprint recognition is implemented. The voiceprint recognition-based identity authentication method can be widely applied to various account management systems for ensuring the security of accounts.

In the related art, before identity authentication is implemented by utilizing the voiceprint recognition technique, firstly a user needs to read out pre-set text information, and a voice signal of the user at this moment is collected and analyzed to obtain corresponding voiceprint information which serves as reference voiceprint information of the user and is stored in a voiceprint library. When identity authentication is being implemented, a person to be authenticated is also required to read out the above pre-set text information, and a voice signal of the person to be authenticated is collected and analyzed to obtain corresponding voiceprint information. By comparing the voiceprint information with the reference voiceprint information in the voiceprint library, it can be determined whether the person to be authenticated is the user himself/herself.

In the art above, text information for identity authentication has been disclosed when the voiceprint library is established, and accordingly, the text information that the person to be authenticated is required to read out when identity authentication is performed is also known. If a voice file of the user himself/herself reading out the text information has been recorded in advance, then any person can be authenticated successfully by playing the voice file which is recorded in advance. It can be seen that the existing voiceprint recognition-based identity authentication method has a severe potential security hazard.

US 2012/130714 A1 describes a system for speaker verification with automatic enrollment, where voiceprints are built from data uttered by a user during a telephone call.

US 8 812 320 B1 discloses a system for automatically obtaining sub-word voiceprints.

### Summary of the invention

The invention is defined in the appended claims. All following occurrences of the word "embodiment(s)", if referring to feature combinations different from those defined by the independent claims, refer to examples which were originally filed but which do not represent embodiments of the presently claimed invention; these examples are still shown for illustrative purposes only. In order to overcome the problem existing in the related art, the present application provides a method for managing voiceprint information according to claim 1, and a system for managing voiceprint information according to claim 4.

The present application involves filtering a historical voice file stored in a relevant system to obtain voice information of a first user, obtaining text information corresponding to the voice information by means of text recognition processing, and editing the voice information and the corresponding text information into reference voiceprint information of the first user. Since the text information and the voice information in the reference voiceprint information are both obtained on the basis of the historical voice file mentioned above, rather than being pre-set by the relevant system, i.e., are not disclosed, neither the first user nor the second user nor any other user would foresee the specific content of text information which needs to be reread when identity authentication is executed, thereby being unable to record a corresponding voice file in advance, and thus being also unable to achieve the objective of successful authentication by playing a voice file which has been recorded in advance. Therefore, in comparison with the existing voiceprint recognition-based identity authentication method, identity authentication is performed based on the voiceprint information management method provided by the present application, the authentication result is more accurate, no potential security hazard exists, and the security of an account is higher.

It should be understood that the above general description and the following detailed description are merely illustrative and explanatory, and cannot limit the present application.

### Brief description of accompanying drawings

The drawings herein are incorporated into the description and constitute a part of the description, which show embodiments conforming to the present invention, and are used to explain the principles of the present invention together with the description.
Fig. 1 is a flow chart of a voiceprint information management method provided by an embodiment of the present application.
Fig. 2 is a flow chart of another voiceprint information management method provided by an embodiment of the present application.
Fig. 3 is a flow chart of a method for storing reference voiceprint information provided by an embodiment of the present application.
Fig. 4 is a structural block diagram of a voiceprint information management system provided by an embodiment of the present application.
Fig. 5 is a structural block diagram of another voiceprint information management system provided by an embodiment of the present application.
Fig. 6 is a flow chart of an identity authentication method provided by an embodiment of the present application.
Fig. 7 is a flow chart of another identity authentication method provided by an embodiment of the present application.
Fig. 8 is a structural block diagram of an identity authentication system provided by an embodiment of the present application.
Fig. 9 is a structural block diagram of another identity authentication system provided by an embodiment of the present application.

### Detailed description

The exemplary embodiments will be described in detail herein, and the examples thereof are represented in the drawings. In the description below which relates to drawings, unless otherwise represented, the same number in different drawings represents the same or similar element. The embodiments described in the exemplary embodiments below do not represent all the embodiments consistent with the present invention. On the contrary, they are merely examples of the apparatus and method consistent to some aspects of the present invention which are described in detail in the appended claims.

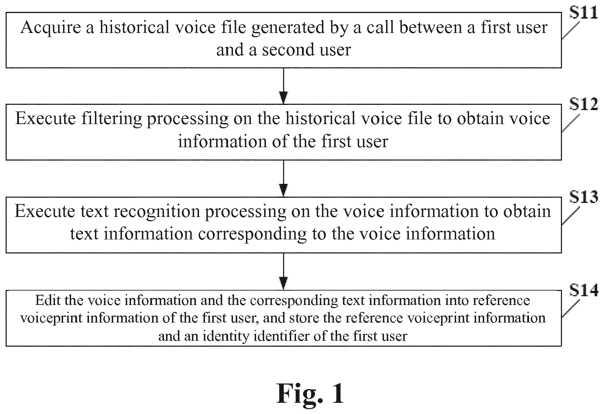

Fig. 1 is a flow chart of a voiceprint information management method provided by an embodiment of the present application. The voiceprint information management method is applied to an account management system. As shown in Fig. 1, the voiceprint information management method comprises the following steps.

S11, acquire a historical voice file generated by a call between a first user and a second user.

The first user above may be a registered user who has a corresponding private account in the account management system, and accordingly, the second user may be a service staff of the account management system.
S12, execute filtering processing on the historical voice file to obtain voice information of the first user.
S13, execute text recognition processing on the voice information to obtain text information corresponding to the voice information.
S14, edit the voice information and the corresponding text information into reference voiceprint information of the first user, and store the reference voiceprint information and an identity identifier of the first user.

In general, in order to facilitate performance statistics, service quality evaluation, dispute handling, etc., the account management system may record the voice call process between a registered user and a service staff and store the corresponding voice file. In view of this, the embodiments of the present application involve filtering out a machine prompt tone and service staff sound information in the historical voice file stored in the account management system to obtain voice information of the registered user, and performing text recognition processing on the voice information to obtain text information corresponding to the voice information, and thus the voice information and the corresponding text information can serve as a group of reference voiceprint information of the registered user. The steps above are executed with regard to each registered user respectively, and thus reference voiceprint information corresponding to each registered user can be obtained to achieve the creation of a voiceprint library.

It can be seen from the above method that the embodiments of the present application involve filtering a historical voice file stored in a relevant system to obtain voice information of a first user, obtaining text information corresponding to the voice information by means of text recognition processing, and editing the voice information and the corresponding text information into reference voiceprint information of the first user. Since the text information and the voice information in the reference voiceprint information are both obtained on the basis of the historical voice file mentioned above, rather than being pre-set by the relevant system, i.e., are not disclosed, neither the first user nor the second user nor any other user would foresee the specific content of text information which needs to be reread when identity authentication is executed, thereby being unable to record a corresponding voice file in advance, and thus being also unable to achieve the objective of successful authentication by playing a voice file which has been recorded in advance. Therefore, in comparison with the existing voiceprint recognition-based identity authentication method, identity authentication is performed based on the voiceprint information management method provided by the embodiments of the present application, the authentication result is more accurate, no potential security hazard exists, and the security of an account is higher.

In a feasible embodiment of the present application, a historical voice file corresponding to any call process between the first user and the second user can be acquired randomly, so that identity identifiers in the voiceprint library correspond to reference voiceprint information on a one-to-one basis. Since it cannot be foreseen to which call process the actually acquired historical voice file corresponds, the specific content of text information in the obtained reference voiceprint information cannot be foreseen, and thus executing identity authentication based on the present embodiment can ensure the accuracy of the authentication result, and improve the security of an account.

In another feasible embodiment of the present application, all the historical voice files corresponding to the first user may also be acquired, wherein each historical voice file may correspond to at least one group of reference voiceprint information, so that one identity identifier in the voiceprint library may correspond to a plurality of groups of reference voiceprint information (i.e., the first user has a plurality of groups of reference voiceprint information); and accordingly, any group of reference voiceprint information can be acquired randomly to execute identity authentication. Since text information in each group of reference voiceprint information is not disclosed, and the reference voiceprint information acquired when identity authentication is executed cannot be foreseen either, the specific content of text information for executing identity authentication cannot be foreseen either, and therefore, it is impossible to record a corresponding voice file in advance, and to achieve the objective of successful authentication by playing a voice file which has been recorded in advance. Therefore, executing identity authentication based on the present embodiment can ensure the accuracy of the authentication result, and improve the security of an account.

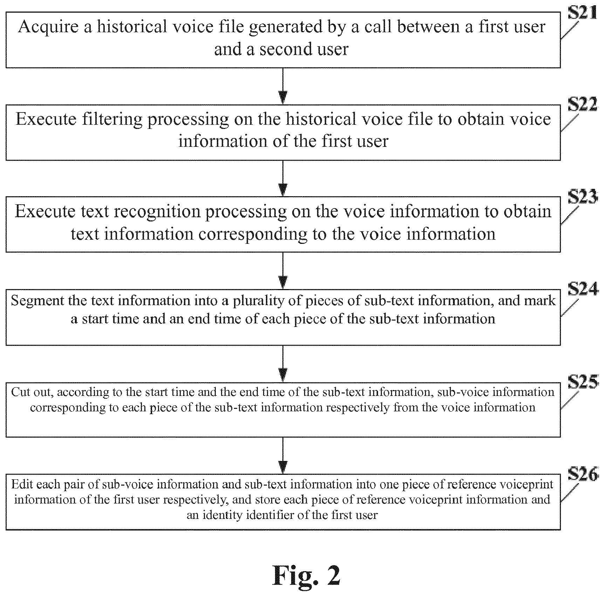

Fig. 2 is a flow chart of a voiceprint information management method provided by another embodiment of the present application. The voiceprint information management method is applied to an account management system. As shown in Fig. 2, the voiceprint information management method comprises the following steps.
S21, acquire a historical voice file generated by a call between a first user and a second user.
S22, execute filtering processing on the historical voice file to obtain voice information of the first user.
S23, execute text recognition processing on the voice information to obtain text information corresponding to the voice information.
S24, segment the text information into a plurality of pieces of sub-text information, and mark a start time and an end time of each piece of the sub-text information.
S25, cut out, according to the start time and the end time of the sub-text information, sub-voice information corresponding to each piece of the sub-text information respectively from the voice information.
S26, edit each pair of sub-voice information and sub-text information into one piece of reference voiceprint information of the first user respectively, and store each piece of reference voiceprint information and an identity identifier of the first user.

Since the historical voice file is a call recording file between the first user and the second user within a period of time, the voice information obtained by filtering contains a plurality of segments of voice information of the first user, and accordingly, the text information obtained by text recognition contains a plurality of sentences or phrases. The embodiments of the present application involve segmenting text information into a plurality of pieces of sub-text information (each piece of sub-text information may be a sentence, a phrase or a word); and at the same time, the start time and the end time of each piece of sub-text information obtained by segmentation are marked, and sub-voice information corresponding to the sub-text information is cut out from the voice information according to the start time and the end time (that is, voice information is segmented according to the sub-text information). For example, the sentence "my account is locked" in text information is obtained by recognition from the time period of 00:03 to 00:05 of voice information, then the sentence "my account is locked" is segmented into one piece of sub-text information, with the start time and the end time being 00:03 and 00:05, and accordingly, the voice information at the time period of 00:03 to 00:05 in the voice information is cut out, then sub-voice information corresponding to the sub-text information "my account is locked" is obtained. By segmenting text information and voice information, a plurality of pairs of sub-text information and sub-voice information can be obtained, and each pair is edited into reference voiceprint information respectively according to a pre-determined format, then a plurality of pieces of reference voiceprint information corresponding to the same user are obtained.

In the embodiments of the present invention, editing the sub-voice information and the corresponding sub-text information into reference voiceprint information may comprise: processing the sub-voice information into corresponding sub-voiceprint information, and setting a file name for the sub-voiceprint information, wherein the format of the file name can be "voiceprint number.file format postfix", such as 0989X.WAV; and storing the sub-voiceprint information and information such as the identity identifier of the first user, and sub-text information corresponding to the sub-voiceprint information. The storage structure of the voiceprint library obtained on the basis of the above voiceprint information management method is as shown in Table 1.

**Table 1 Example of storage structure of voiceprint library**

| User ID | User voiceprint number | Sub-text information | Sub-voiceprint information |
|---|---|---|---|
| 139XXXXXXXX | 1 | Very satisfied | 0989X.WAV |
| 139XXXXXXXX | 2 | Why haven't refunded yet | 0389X.WAV |
| 189XXXXXXXX | 1 | I'm very angry | 0687X.WAV |
| 189XXXXXXXX | 2 | Account is locked | 0361X.WAV |

In Table 1, each line corresponds to one piece of reference voiceprint information in the voiceprint library; the identity identifier (i.e., user ID) is used as the primary key for voiceprint information query and call; and the user voiceprint number is used for marking the number of pieces of reference voiceprint information corresponding to the same user ID. Taking the user ID "139XXXXXXXX" as an example, when an identity authentication request with regard to the user ID is received, reference voiceprint information corresponding to "139XXXXXXXX" is queried in the voiceprint library above, a plurality of query results can be obtained, and one piece is randomly extracted therefrom as reference voiceprint information of the present authentication. For example, reference voiceprint information No. 2 corresponding to the user ID is extracted to serve as reference voiceprint information of the present authentication; sub-text information "why haven't refunded yet" therein is output; voice information to be authenticated that is obtained by a user to be authenticated rereading the sub-file information is received, and the voice information to be authenticated is processed as voiceprint information to be authenticated; the voiceprint information to be authenticated is compared with sub-voiceprint information "0389X.WAV" extracted from the voiceprint library; and if the two match with each other, then it is determined that identity authentication succeeds, i.e., it is considered that the user to be authenticated is the first user corresponding to "139XXXXXXXX"; otherwise, if the two do not match with each other, then it is determined that identity authentication fails.

It can be seen from the above technical solution that the embodiments of the present application involve filtering a historical voice file stored in a system to obtain voice information of a first user, obtaining corresponding text information by performing text recognition processing on the voice information, segmenting the recognized text information into a plurality of pieces of sub-text information, cutting out corresponding sub-voice information from the above voice information according to the start time and the end time of each piece of the sub-text information, editing each pair of sub-text information and sub-voice information into one piece of reference voiceprint information respectively, and storing the same in a voiceprint library, so that each first user has a plurality of pieces of reference voiceprint information; and when identity authentication needs to be executed, one piece is randomly selected from a plurality of pieces of reference voiceprint information corresponding to an identity identifier to be authenticated. Since the reference voiceprint information acquired when identity authentication is executed is random, the specific content of text information that the user to be authenticated needs to reread cannot be foreseen, and therefore executing identity authentication based on the voiceprint library obtained in the present embodiment can ensure the accuracy of the authentication result, and improve the security of an account. In addition, in the present embodiment, sub-text information in each piece of reference voiceprint information is simple and short, which can reduce the time required for rereading the text information, reduce the time consumed by voiceprint comparison, and improve the authentication efficiency.

The voiceprint information management method provided by the embodiments of the present application not only can create a new voiceprint library, but also can update the created voiceprint library, for example, adding reference voiceprint information corresponding to a new user, and adding new reference voiceprint information for an old user. With regard to a new user, only a historical voice file corresponding to the new user needs to be acquired, and the steps S12 to S4 or steps S22 to S26 above are executed, then the reference voiceprint information corresponding to the new user can be obtained. With lapse of time, the historical voice files corresponding to the same user are continuously increasing; therefore, with regard to the old user, a corresponding newly-added historical voice file can be acquired and the steps above are executed, then new reference voiceprint information can be added for the old user.

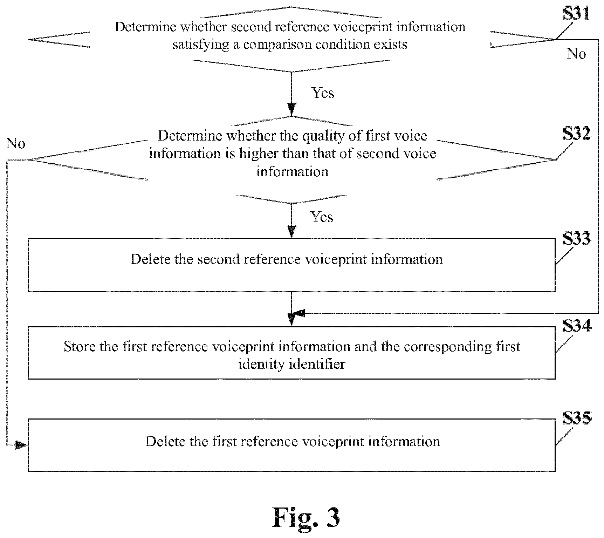

Based on the voiceprint information management method provided by the embodiments of the present application, one or more pieces of reference voiceprint information can be set for a first user. When a plurality of pieces of reference voiceprint information is set for the same first user, it needs to ensure that text information in any two pieces of reference voiceprint information corresponding to the first user is different. However, in practical applications, the following cases would appear inevitably: text information of the same content is recognized from different historical voice files, or a plurality of pieces of sub-text information of the same content are segmented from the same text information, which makes the same sub-text information correspond to a plurality of pieces of sub-voice information. At this moment, in the embodiments of the present application, the method as shown in Fig. 3 is adopted to achieve the storage of reference voiceprint information. For the convenience of description, it is assumed that reference voiceprint information to be stored is first reference voiceprint information constituted by first text information and first voice information. As shown in Fig. 3, the process for storing the first reference voiceprint information in an embodiment of the present application comprises the following steps:
S31, determine whether second reference voiceprint information satisfying a comparison condition exists, and if so, then execute step S32, otherwise, execute step S34.
   wherein the comparison condition above comprises: second text information corresponding to the second reference voiceprint information being the same as the first text information in the first reference voiceprint information, and a second identity identifier corresponding to the second reference voiceprint information being the same as a first identity identifier corresponding to the first reference voiceprint information.
S32, determine whether the quality of first voice information in the first reference voiceprint information is higher than that of second voice information in the second reference voiceprint information, and if so, executed step S33, otherwise, execute step S35.
S33, delete the second reference voiceprint information, and execute step S34.
S34, store the first reference voiceprint information and the corresponding first identity identifier.
S35, delete the first reference voiceprint information.

In step S31 above, the search range for determining whether the second reference voiceprint information mentioned above exists at least comprises reference voiceprint information which has been stored in the voiceprint library, and may also comprise reference voiceprint information which is generated synchronously with the first reference voiceprint information and has not yet been stored. If the second reference voiceprint information mentioned above does not exist, then the first reference voiceprint information is stored directly. If the second reference voiceprint information mentioned above has been found, it indicates that at least two different pieces of voice information exist with regard to the same first user and the same text information, and at this moment, the quality of the first voice information in the first reference voiceprint information is compared with that of the second voice information in the second reference voiceprint information; if the quality of the first voice information is higher than that of the second voice information, then the first reference voiceprint information is stored, and at the same time the second reference voiceprint information is deleted; and if the quality of the first voice information is lower than that of the second voice information, then the first reference voiceprint information is deleted directly. That is, with regard to the same text information, only the voice information with the highest quality is retained, so as to improve the accuracy of the comparison result of voice information and reduce the comparison difficulty in an identity authentication process.

Based on the storage process mentioned above, the following three voiceprint library update methods can be implemented: 1) adding reference voiceprint information of a new user; 2) adding reference voiceprint information with different text information corresponding to an old user; and 3) replacing reference voiceprint information with a relatively low quality of voice information in the voiceprint library with reference voiceprint information with a higher quality of voice information.

It can be seen from the above technical solution that, in the embodiments of the present application, with regard to new reference voiceprint information obtained, the information is not directly stored in the voiceprint library, but firstly it is determined whether another reference voiceprint information in which the text information and the corresponding identity identifier are respectively the same as those in the reference voiceprint information has been stored, and if so, then the quality of voice information in the two pieces of reference voiceprint information is compared, the reference voiceprint information with the higher quality of voice information is retained, and the reference voiceprint information with the lower quality of voice information is deleted. Therefore, the embodiments of the present application not only can ensure that, in the stored reference voiceprint information, text information in any two pieces of reference voiceprint information corresponding to the same identity identifier (i.e., the same first user) is different, but also can ensure that the quality of voice information corresponding to each kind of text information is the highest; and when identity authentication is executed based on the embodiments of the present application, performing voiceprint comparison based on voice information with a higher quality can ensure the accuracy of authentication and improve the authentication efficiency.

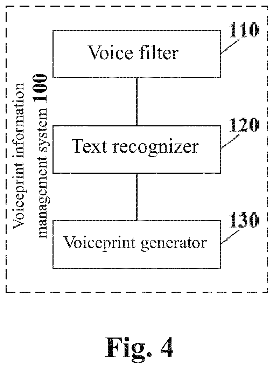

Fig. 4 is a structural block diagram of a voiceprint information management system provided by an embodiment of the present application. The voiceprint information management system can be applied to an account management system. As shown in Fig. 4, the voiceprint information management system 100 comprises: a voice filter 110, a text recognizer 120 and a voiceprint generator 130.

The voice filter 110 is configured to acquire a historical voice file generated by a call between a first user and a second user, and execute filtering processing on the historical voice file to obtain voice information of the first user.

The text recognizer 120 is configured to execute text recognition processing on the voice information to obtain text information corresponding to the voice information.

The voiceprint generator 130 is configured to edit the voice information and the corresponding text information into reference voiceprint information of the first user, and store the reference voiceprint information and an identity identifier of the first user.

It can be seen from the above structure that the embodiments of the present application involve filtering a historical voice file stored in a relevant system to obtain voice information of a first user, obtaining text information corresponding to the voice information by means of text recognition processing, and editing the voice information and the corresponding text information into reference voiceprint information of the first user. Since the text information and the voice information in the reference voiceprint information are both obtained on the basis of the historical voice file mentioned above, rather than being pre-set by the relevant system, i.e., are not disclosed, neither the first user nor the second user nor any other user would foresee the specific content of text information which needs to be reread when identity authentication is executed, thereby being unable to record a corresponding voice file in advance, and thus being also unable to achieve the objective of successful authentication by playing a voice file which has been recorded in advance. Therefore, in comparison with the existing voiceprint recognition-based identity authentication method, identity authentication is performed based on the voiceprint information management method provided by the embodiments of the present application, the authentication result is more accurate, no potential security hazard exists, and the security of an account is higher.

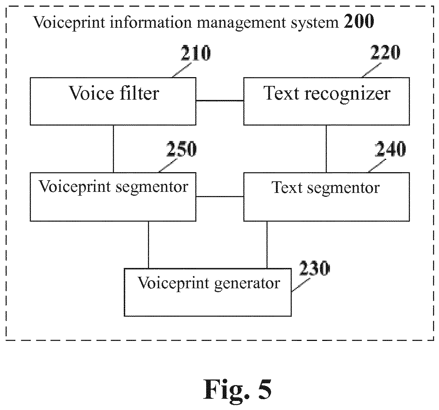

Fig. 5 is a structural block diagram of another voiceprint information management system provided by an embodiment of the present application. The voiceprint information management system can be applied to an account management system. As shown in Fig. 5, the voiceprint information management system 200 comprises: a voice filter 210, a text recognizer 220, a text segmentor 240, a voiceprint segmentor 250 and a voiceprint generator 230.

The voice filter 210 is configured to acquire a historical voice file generated by a call between a first user and a second user, and execute filtering processing on the historical voice file to obtain voice information of the first user.

The text recognizer 220 is configured to execute text recognition processing on the voice information to obtain text information corresponding to the voice information.

The text segmentor 240 is configured to segment the text information into a plurality of pieces of sub-text information, and mark a start time and an end time of each piece of the sub-text information.

The voiceprint segmentor 250 is configured to respectively cut out, according to the start time and the end time of the sub-text information, sub-voice information corresponding to each piece of the sub-text information from the voice information.

The voiceprint generator 230 is configured to respectively edit each pair of sub-voice information and sub-text information into one piece of reference voiceprint information of the first user, and store each piece of reference voiceprint information and an identity identifier of the first user.

It can be seen from the above structure that the embodiments of the present application involve filtering a historical voice file stored in a system to obtain voice information of a first user, obtaining corresponding text information by performing text recognition processing on the voice information, segmenting the recognized text information into a plurality of pieces of sub-text information, cutting out corresponding sub-voice information from the voice information above according to the start time and the end time of each piece of sub-text information, editing each pair of sub-text information and sub-voice information into one piece of reference voiceprint information respectively, and storing the same in a voiceprint library, so that each first user has a plurality of pieces of reference voiceprint information; and when identity authentication needs to be executed, one piece is randomly selected from a plurality of pieces of reference voiceprint information corresponding to an identity identifier to be authenticated. Since the reference voiceprint information acquired when identity authentication is executed is random, the specific content of text information that the user to be authenticated needs to reread cannot be foreseen, and it is impossible to record a corresponding voice file in advance, and to achieve the objective of successful authentication by playing a voice file which has been recorded in advance. Therefore, executing identity authentication based on the voiceprint library obtained by present embodiment can ensure the accuracy of the authentication result, and improve the security of an account. In addition, in the present embodiment, sub-text information in each piece of reference voiceprint information is simple and short, which can reduce the time required for rereading the text information, reduce the time consumed by voiceprint comparison, and improve the authentication efficiency.

In the voiceprint information management system provided by the embodiments of the present application, in order to implement the function of storing the reference voiceprint information and the identity identifier of the first user, the voiceprint generator 130 and the voiceprint generator 230 above can be configured to:
determine whether second reference voiceprint information exists, which has corresponding second text information the same as first text information in first reference voiceprint information to be stored and a corresponding second identity identifier also the same as a first identity identifier corresponding to the first reference voiceprint information;
if the second reference voiceprint information does not exist, then directly store the first reference voiceprint information and the first identity identifier;
if the second reference voiceprint information exists, then compare the quality of first voice information in the first reference voiceprint information with that of second voice information in the second reference voiceprint information, and if the quality of the first voice information is lower than that of the second voice information, then delete the first reference voiceprint information; and
if the quality of the first voice information is higher than that of the second voice information, then delete the second reference voiceprint information, and store the first reference voiceprint information and the first identity identifier.

Based on the voiceprint generators configured as above, the embodiments of the present application not only can ensure that, in the stored reference voiceprint information, text information in any two pieces of reference voiceprint information corresponding to the same user is different, but also can ensure that the quality of voice information corresponding to each kind of text information is the highest; and thus when identity authentication is executed based on the embodiments of the present application, performing voiceprint comparison based on voice information with a higher quality can ensure the accuracy of authentication and improve the authentication efficiency.

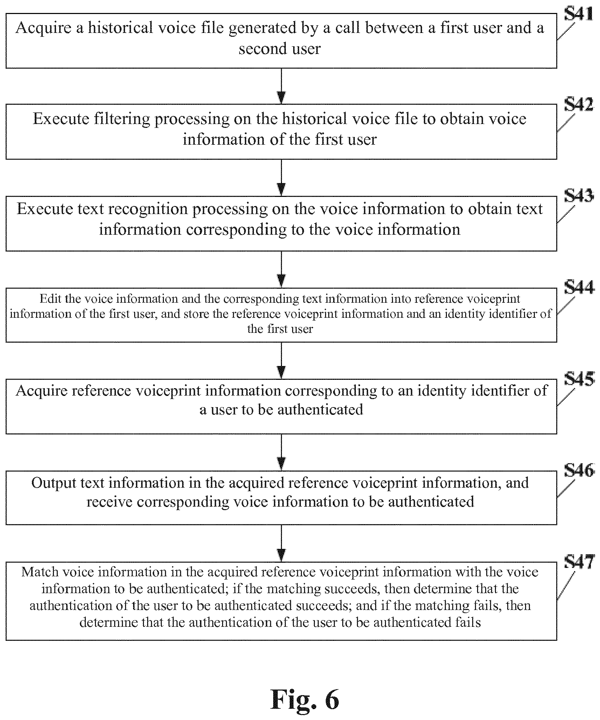

Fig. 6 is a flow chart of an identity authentication method provided by an embodiment of the present application; and the identity authentication method can be applied to an account management system. Referring to Fig. 6, the identity authentication method comprises the following steps:
S41, acquire a historical voice file generated by a call between a first user and a second user.
   wherein the first user above may be a registered user who has a corresponding private account in the account management system, and accordingly, the second user may be a service staff of the account management system.
S42, execute filtering processing on the historical voice file to obtain voice information of the first user.
S43, execute text recognition processing on the voice information to obtain text information corresponding to the voice information.
S44, edit the text information and the corresponding voice information into reference voiceprint information of the first user, and store the reference voiceprint information and an identity identifier of the first user.
S45, acquire reference voiceprint information corresponding to an identity identifier of a user to be authenticated.
S46, output text information in the acquired reference voiceprint information, and receive corresponding voice information to be authenticated.
S47, match voice information in the acquired reference voiceprint information with the voice information to be authenticated; if the matching succeeds, then determine that the authentication of the user to be authenticated succeeds; and if the matching fails, then determine that the authentication of the user to be authenticated fails.

It can be seen from the above method that the embodiments of the present application involve filtering a historical voice file stored in a relevant system to obtain voice information of a first user, obtaining text information corresponding to the voice information by means of text recognition processing, and editing the voice information and the corresponding text information into reference voiceprint information of the first user. Since the text information and the voice information in the reference voiceprint information are both obtained on the basis of the historical voice file mentioned above, rather than being pre-set by the relevant system, i.e., are not disclosed, neither the first user nor the second user nor any other user would foresee the specific content of text information which needs to be reread when identity authentication is executed, thereby being unable to record a corresponding voice file in advance, and thus being also unable to achieve the objective of successful authentication by playing a voice file which has been recorded in advance. Therefore, in comparison with the existing voiceprint recognition-based identity authentication method, identity authentication is performed based on the voiceprint information management method provided by the embodiments of the present application, the authentication result is more accurate, no potential security hazard exists, and the security of an account is higher.

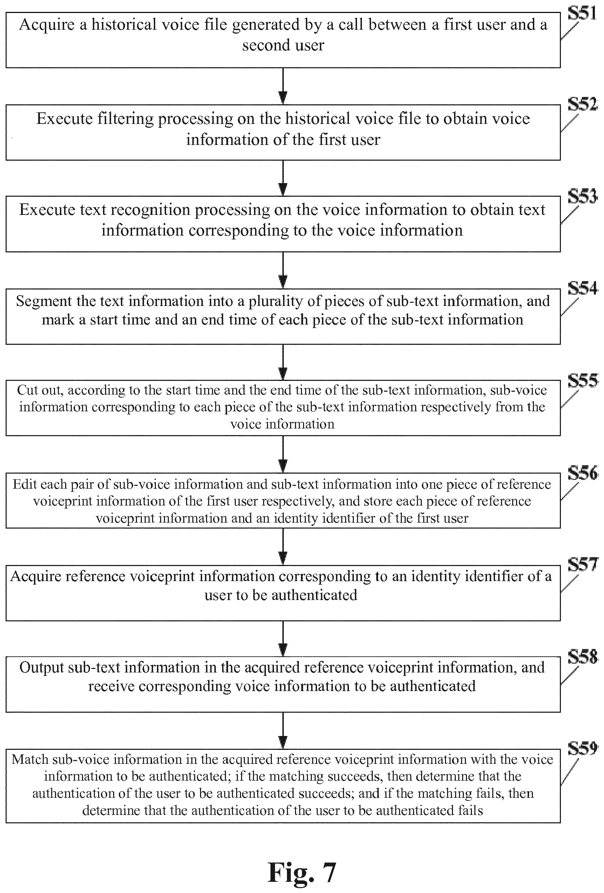

Fig. 7 is a flow chart of another identity authentication method provided by an embodiment of the present application; and the identity authentication method can be applied to an account management system. Referring to Fig. 7, the identity authentication method comprises the following steps:
S51, acquire a historical voice file generated by a call between a first user and a second user.
S52, execute filtering processing on the historical voice file to obtain voice information of the first user.
S53, execute text recognition processing on the voice information to obtain text information corresponding to the voice information.
S54, segment the text information into a plurality of pieces of sub-text information, and mark a start time and an end time of each piece of the sub-text information.
S55, cut out, according to the start time and the end time of the sub-text information, sub-voice information corresponding to each piece of the sub-text information respectively from the voice information.
S56, edit each pair of sub-voice information and sub-text information into one piece of reference voiceprint information of the first user respectively, and store each piece of reference voiceprint information and an identity identifier of the first user.
S57, acquire reference voiceprint information corresponding to an identity identifier of a user to be authenticated.
S58, output sub-text information in the acquired reference voiceprint information, and receive corresponding voice information to be authenticated.
S59, match sub-voice information in the acquired reference voiceprint information with the voice information to be authenticated; if the matching succeeds, then determine that the authentication of the user to be authenticated succeeds; and if the matching fails, then determine that the authentication of the user to be authenticated fails.

It can be seen from the above method that the embodiments of the present application involve segmenting the text information obtained by recognition into a plurality of pieces of sub-text information, cutting out corresponding sub-voice information according to the start time and the end time thereof, and editing each piece of sub-text information and the corresponding sub-voice information into one piece of reference voiceprint information, so that the first user has a plurality of pieces of reference voiceprint information; and when identity authentication needs to be executed, randomly selecting one piece from a plurality of pieces of reference voiceprint information corresponding to an identity identifier to be authenticated. Since reference voiceprint information acquired when identity authentication is executed is random, the specific content of text information that a user to be authenticated needs to reread cannot be foreseen, and it is impossible to record a corresponding voice file in advance, and to achieve the objective of successful authentication by playing a voice file which has been recorded in advance. Therefore, the identity authentication method provided by the present embodiment can ensure the accuracy of the authentication result, and improve the security of an account. In addition, in the present embodiment, sub-text information in each piece of reference voiceprint information is simple and short, which can reduce the time required for rereading the text information, reduce the time consumed by voiceprint comparison, and improve the authentication efficiency.

The identity authentication method provided by the embodiments of the present application can also adopt the method as shown in Fig. 3 to implement the storage of reference voiceprint information, which not only can ensure that, in the stored reference voiceprint information, text information in any two pieces of reference voiceprint information corresponding to the same user is different, but also can ensure that the quality of voice information corresponding to each kind of text information is the highest; and when identity authentication is executed based on the embodiments of the present application, performing voiceprint comparison based on voice information with a higher quality can ensure the accuracy of authentication and improve the authentication efficiency.

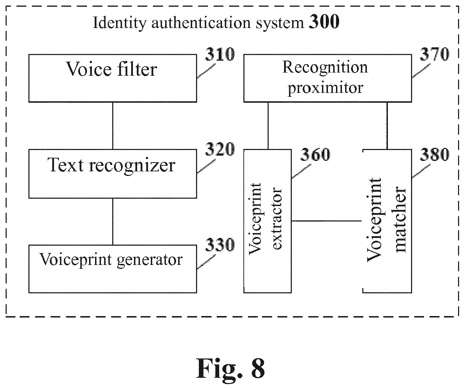

Fig. 8 is a structural block diagram of an identity authentication system provided by an embodiment of the present application, wherein the identity authentication system can be applied to an account management system. Referring to Fig. 8, the identity authentication system 300 comprises: a voice filter 310, a text recognizer 320, a voiceprint generator 330, a voiceprint extractor 360, a recognition proximitor 370 and a voiceprint matcher 380.

The voice filter 310 is configured to acquire a historical voice file generated by a call between a first user and a second user, and execute filtering processing on the historical voice file to obtain voice information of the first user.

The text recognizer 320 is configured to execute text recognition processing on the voice information to obtain text information corresponding to the voice information.

The voiceprint generator 330 is configured to edit the voice information and the corresponding text information into reference voiceprint information of the first user, and store the reference voiceprint information and an identity identifier of the first user.

The voiceprint extractor 360 is configured to acquire reference voiceprint information corresponding to an identity identifier of a user to be authenticated.

The recognition proximitor 370 is configured to output text information in the acquired reference voiceprint information, and receive corresponding voice information to be authenticated.

The voiceprint matcher 380 is configured to match voice information in the acquired reference voiceprint information with the voice information to be authenticated, if the matching succeeds, then determine that the authentication of the user to be authenticated succeeds, and if the matching fails, then determine that the authentication of the user to be authenticated fails.

In the above structure, the recognition proximitor 370 is used for implementing the interaction between the identity authentication system and the user to be authenticated; and in addition to being used for outputting the text information in the reference voiceprint information acquired by the voiceprint extractor 360 and receiving voice information to be authenticated which is input by the user to be authenticated, it can also receive an identity authentication request of the user to be authenticated, trigger the voiceprint extractor 360 after receiving the identity authentication request, and output an authentication result obtained by the voiceprint matcher 380 to the user to be authenticated.

It can be seen from the above structure that the embodiments of the present application involve filtering a historical voice file stored in a relevant system to obtain voice information of a first user, obtaining text information corresponding to the voice information by means of text recognition processing, and editing the voice information and the corresponding text information into reference voiceprint information of the first user. Since the text information and the voice information in the reference voiceprint information are both obtained on the basis of the historical voice file mentioned above, rather than being pre-set by the relevant system, i.e., are not disclosed, neither the first user nor the second user nor any other user would foresee the specific content of text information which needs to be reread when identity authentication is executed, thereby being unable to record a corresponding voice file in advance, and thus being also unable to achieve the objective of successful authentication by playing a voice file which has been recorded in advance. Therefore, in comparison with the existing voiceprint recognition-based identity authentication method, identity authentication is performed based on the voiceprint information management method provided by the embodiments of the present application, the authentication result is more accurate, no potential security hazard exists, and the security of an account is higher.

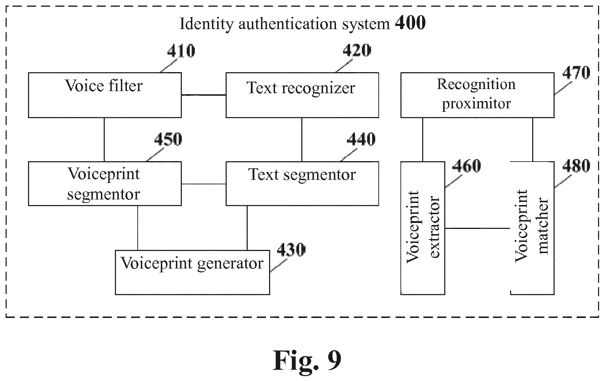

Fig. 9 is a structural block diagram of an identity authentication system provided by an embodiment of the present application, wherein the identity authentication system can be applied to an account management system. Referring to Fig. 9, the identity authentication system 400 comprises: a voice filter 410, a text recognizer 420, a text segmentor 440, a voiceprint segmentor 450, a voiceprint generator 430, a voiceprint extractor 460, a recognition proximitor 470 and a voiceprint matcher 480.

The voice filter 410 is configured to acquire a historical voice file generated by a call between a first user and a second user, and execute filtering processing on the historical voice file to obtain voice information of the first user.

The text recognizer 420 is configured to execute text recognition processing on the voice information to obtain text information corresponding to the voice information.

The text segmentor 440 is configured to segment the text information into a plurality of pieces of sub-text information, and mark a start time and an end time of each piece of the sub-text information.

The voiceprint segmentor 450 is configured to respectively cut out, according to the start time and the end time of the sub-text information, sub-voice information corresponding to each piece of the sub-text information from the voice information.

The voiceprint generator 430 is configured to respectively edit each pair of sub-voice information and sub-text information into one piece of reference voiceprint information of the first user, and store each piece of reference voiceprint information and an identity identifier of the first user.

The voiceprint extractor 460 is configured to acquire reference voiceprint information corresponding to an identity identifier of a user to be authenticated.

The recognition proximitor 470 is configured to output sub-text information in the acquired reference voiceprint information, and receive corresponding voice information to be authenticated.

The voiceprint matcher 480 is configured to match sub-voice information in the acquired reference voiceprint information with the voice information to be authenticated, if the matching succeeds, then determine that the authentication of the user to be authenticated succeeds, and if the matching fails, then determine that the authentication of the user to be authenticated fails.

It can be seen from the above structure that the embodiments of the present application involve segmenting the text information obtained by recognition into a plurality of pieces of sub-text information, cutting out corresponding sub-voice information according to the start time and the end time thereof, and editing each piece of sub-text information and the corresponding sub-voice information into one piece of reference voiceprint information, so that the first user has a plurality of pieces of reference voiceprint information; and when identity authentication needs to be executed, determining a plurality of corresponding pieces of reference voiceprint information according to an identity identifier corresponding to a user to be authenticated, and randomly selecting one piece therefrom for the present identity authentication. Since reference voiceprint information acquired when identity authentication is executed is random, the specific content of text information that a user to be authenticated needs to reread cannot be foreseen, and it is impossible to record a corresponding voice file in advance, and to achieve the objective of successful authentication by playing a voice file which has been recorded in advance. Therefore, the identity authentication system provided by the present embodiment can ensure the accuracy of the authentication result, and improve the security of an account. In addition, in the present embodiment, sub-text information in each piece of reference voiceprint information is simple and short, which can reduce the time required for rereading the text information, reduce the time consumed by voiceprint comparison, and improve the authentication efficiency.

In the identity authentication system provided by the embodiments of the present application, in order to implement the function of storing the reference voiceprint information and the corresponding user identity identifier, the voiceprint generator 330 and the voiceprint generator 430 above can be configured to:
determine whether second reference voiceprint information exists, which has corresponding second text information the same as first text information in first reference voiceprint information to be stored and a corresponding second identity identifier also the same as a first identity identifier corresponding to the first reference voiceprint information;
if the second reference voiceprint information does not exist, then directly store the first reference voiceprint information and the identity identifier of the first user;
if the second reference voiceprint information exists, then compare the quality of first voice information in the first reference voiceprint information with that of second voice information in the second reference voiceprint information, and if the quality of the first voice information is lower than that of the second voice information, then delete the first reference voiceprint information; and
if the quality of the first voice information is higher than that of the second voice information, then delete the second reference voiceprint information, and store the first reference voiceprint information and the corresponding user identity identifier.

Based on the voiceprint generators configured as above, the embodiments of the present application not only can ensure that, in the stored reference voiceprint information, text information in any two pieces of reference voiceprint information corresponding to the same identity identifier is different, but also can ensure that the quality of voice information corresponding to each kind of text information is the highest; and when identity authentication is executed based on the embodiments of the present application, performing voiceprint comparison based on voice information with a higher quality can ensure the accuracy of authentication and improve the authentication efficiency.

Those skilled in the art would readily conceive of other implementations of the present invention after taking the description into consideration and practicing the invention disclosed herein. The present application is intended to cover any variants, usages or adaptive variations of the present invention, and these variants, usages or adaptive variations follow the general principles of the present invention and comprise common knowledge or customary technical means in the art which are not disclosed in the present application.

It should be understood that the present invention is not limited to the precise structures which have been described above and shown in the drawings, and various modifications and changes can be made without departing from the scope thereof. The scope of the present invention is merely limited by the appended claims.

## Claims

1. A method for managing voiceprint information, comprising:
acquiring (S11, S21, S41, S51) a historical voice file generated by a call between a first user and a second user and stored in a system;
executing (S12, S22, S42, S52) filtering processing on the historical voice file to obtain voice information of the first user;
executing (S13, S23, S43, S53) text recognition processing on the voice information to obtain text information corresponding to the voice information;
segmenting (S24) the text information into a plurality of pieces of sub-text information, including marking a start time and an end time of each piece of the sub-text information, wherein a piece of sub-text information is a phrase or sentence comprising a plurality of words;
obtaining (S25) sub-voice information corresponding to each piece of the sub-text information by segmenting the voice information according to the start time and the end time of each piece of the sub-text information; and
editing each pair of the sub-voice information and the corresponding sub-text information by:
processing the sub-voice information into corresponding sub-voiceprint information, setting a file name for the sub-voiceprint information, and storing (S26, S34, S44) the sub-voiceprint information and the sub-text information, in association with a user identifier of the first user, as a respective piece of first reference voiceprint information of the first user.

2. The method according to claim 1, wherein storing (S34) the first reference voiceprint information in association with the user identifier of the first user comprises:
determining (S31) whether second reference voiceprint information exists in association with a second user identifier that is the same as the user identifier of the first user, the second reference voiceprint information including second text information that is the same as the text information in the first reference voiceprint information; and
if the second reference voiceprint information does not exist, storing the first reference voiceprint information in association with the user identifier, otherwise:
comparing (S32) the quality of the voice information in the first reference voiceprint information with voice information in the second reference voiceprint information to determine voice information of a higher quality,
storing (S34) the reference voiceprint information having the voice information of the higher quality as the first reference voiceprint reference information in association with the user identifier, and
deleting (S33) the other reference voiceprint information.

3. The method of any one of claims 1 to 2, further comprising:
acquiring (S45, S57) reference voiceprint information corresponding to an identifier of a user to be authenticated;
outputting (S46, S58) text information in the acquired reference voiceprint information, and in response, receiving voice information to be authenticated corresponding to the outputted text;
matching (S47, S59) voice information in the acquired reference voiceprint information with the voice information to be authenticated; and
if the matching succeeds, determining (S47, S59) that the authentication of the user to be authenticated succeeds,
otherwise determining (S47, S59) that the authentication of the user to be authenticated fails.

4. A system for managing voiceprint information (100, 200, 300, 400), comprising:
a voice filter (110, 210, 310, 410) configured to acquire a historical voice file stored in the system generated by a call between a first user and a second user, and execute filtering processing on the historical voice file to obtain voice information of the first user;
a text recognizer (120, 220, 320, 420) configured to execute text recognition processing on the voice information to obtain text information corresponding to the voice information;
a text segmentor (240, 440), configured to segment the text information into a plurality of pieces of sub-text information and to mark a start time and an end time of each piece of the sub-text information, wherein a piece of sub-text information is a phrase or sentence comprising a plurality of words;
a voiceprint segmentor (250, 450) configured to obtain sub-voice information corresponding to each piece of the sub-text information by segmenting the voice information according to the start time and the end time of the sub-text information; anda voiceprint generator (130, 230, 330, 430) configured to, edit each pair of the sub-voice information and the corresponding sub-text information, by being configured to:
process the sub-voice information into corresponding sub-voiceprint information, set a file name for the sub-voiceprint information and storing (S26, S34, S44) the sub-voiceprint information and the sub-text information, in association with a user identifier of the first user, as a respective piece of first reference voiceprint information of the first user.

5. The system (100, 200, 300, 400) according to claim 4, wherein the voiceprint generator (130, 230, 330, 430) stores the reference voiceprint information in association with the user identifier of the first user by:
determining whether second reference voiceprint information exists in association with a second user identifier that is the same as the user identifier of the first user, the second reference voice print information including second text information that is the same as the text information in the first reference voiceprint information; and
if the second reference voiceprint information does not exist, storing the first reference voiceprint information in association with the user identifier, otherwise:
comparing the quality of the voice information in the first reference voiceprint information with information in the second reference voiceprint information to determine voice information of a higher quality,
storing the reference voiceprint information having voice information of the higher quality as the first reference voice print information in association with the user identifier, and
deleting the other reference voiceprint information.

6. The system (200, 300, 400) according to any one of claims 4 to 5, further comprising:
a voiceprint extractor (360, 460) configured to acquire reference voiceprint information corresponding to an identifier of a user to be authenticated;
a recognition proximitor (370, 470) configured to output text information in the acquired reference voiceprint information and receive, in response, voice information to be authenticated corresponding to the outputted text; and
a voiceprint matcher (380, 460) configured to:
match voice information in the acquired reference voiceprint information with the voice information to be authenticated,
if the matching succeeds, determine that the authentication of the user to be authenticated succeeds, and
if the matching fails, determine that the authentication of the user to be authenticated fails.

## Patentansprüche

1. Verfahren zur Verwaltung von Sprachabdruckinformationen, umfassend:
Erfassen (S11, S21, S41, S51) einer Vergangenheitssprachdatei, die durch einen Anruf zwischen einem ersten Benutzer und einem zweiten Benutzer erzeugt worden ist und in einem System gespeichert ist;
Ausführen (S12, S22, S42, S52) einer Filterverarbeitung an der Vergangenheitssprachdatei, um Sprachinformationen des ersten Benutzers zu erhalten;
Ausführen (S13, S23, S43, S53) einer Texterkennungsverarbeitung an den Sprachinformationen, um den Sprachinformationen entsprechende Textinformationen zu erhalten;
Segmentieren (S24) der Textinformationen in eine Mehrzahl von Teilen von Subtextinformationen, einschließlich der Markierung einer Anfangszeit und einer Endzeit jedes Teils der Subtextinformationen, wobei ein Teil der Subtextinformationen eine Phrase oder ein Satz ist, die bzw. der eine Mehrzahl von Wörtern umfasst;
Erhalten (S25) von Subsprachinformationen, die jedem Teil der Subtextinformationen entsprechen, durch Segmentieren der Sprachinformationen gemäß der Anfangszeit und der Endzeit jedes Teils der Subtextinformationen; und
Editieren jedes Paars der Sprachinformationen und der entsprechenden Subtextinformationen durch:
Verarbeiten der Subsprachinformationen in entsprechende Subsprachabdruckinformationen, Festlegen eines Dateinamens für die Subsprachabdruckinformationen und Speichern (S26, S34, S44) der Subsprachabdruckinformationen und der Subtextinformationen in Verbindung mit einer Benutzerkennung des ersten Benutzers als einen entsprechenden Teil erster Referenzsprachabdruckinformationen des ersten Benutzers.

2. Verfahren nach Anspruch 1, wobei das Speichern (S34) der ersten Referenzsprachabdruckinformationen in Verbindung mit der Benutzerkennung des ersten Benutzers folgendes umfasst:
Bestimmen (S31), ob zweite Referenzsprachabdruckinformationen in Verbindung mit einer zweiten Benutzerkennung existieren, die der Benutzerkennung des ersten Benutzers entspricht, wobei die zweiten Referenzsprachabdruckinformationen zweite Textinformationen aufweisen, die den Textinformationen in den ersten Referenzsprachabdruckinformationen entsprechen; und
wenn die zweiten Sprachabdruckinformationen nicht existieren, Speichern der ersten Referenzsprachabdruckinformationen in Verbindung mit der Benutzerkennung, ansonsten:
Vergleichen (S32) der Qualität der Sprachinformationen in den ersten Referenzsprachabdruckinformationen mit Sprachinformationen in den zweiten Referenzsprachabdruckinformationen, um Sprachinformationen einer höheren Qualität zu bestimmen;
Speichern (S34) der Referenzsprachabdruckinformationen mit den Sprachinformationen der höheren Qualität als die ersten Referenzsprachabdruckinformationen in Verbindung mit der Benutzerkennung; und
Löschen (S33) der anderen Referenzsprachabdruckinformationen.

3. Verfahren nach Anspruch 1 oder 2, ferner umfassend:
Erfassen (S45, S57) von Referenzsprachabdruckinformationen, die einer Kennung eines zu authentifizierenden Benutzers entsprechen;
Ausgeben (S46, S58) von Textinformationen in den erfassten Referenzsprachabdruckinformationen, und als Reaktion darauf, Empfangen von zu authentifizierenden Sprachinformationen gemäß dem ausgegeben Text;
Abgleichen (S47, S59) der Sprachinformationen in den erfassten Referenzsprachabdruckinformationen mit den zu authentifizierenden Sprachinformationen; und
bei erfolgreichem Abgleich, Bestimmen (S47, S59), dass die Authentifizierung des zu authentifizierenden Benutzers erfolgreich ist;
im anderen Fall, Bestimmen (S47, S59), dass die Authentifizierung des zu authentifizierenden Benutzers fehlschlägt.

4. System zur Verwaltung von Sprachabdruckinformationen (100, 200, 300, 400), umfassend:
einen Sprachfilter (110, 210, 310, 410), der so gestaltet ist, dass er eine in dem System gespeicherte Vergangenheitssprachdatei speichert, die durch einen Anruf zwischen einem ersten Benutzer und einem zweiten Benutzer erzeugt worden ist, und dass er eine Filterverarbeitung an der Vergangenheitssprachdatei ausführt, um Sprachinformationen des ersten Benutzers zu erhalten;
eine Texterkennungseinrichtung (120, 220, 320, 420), die so gestaltet ist, dass sie eine Texterkennungsverarbeitung an den Sprachinformationen ausführt, um den Sprachinformationen entsprechende Textinformationen zu erhalten;
eine Textsegmentierungseinrichtung (240, 440), die so gestaltet ist, dass sie die Textinformationen in eine Mehrzahl von Teilen von Subtextinformationen segmentiert und eine Anfangszeit und eine Endzeit jedes Teils der Subtextinformationen markiert, wobei ein Teil der Subtextinformationen eine Phrase oder ein Satz ist, die bzw. der eine Mehrzahl von Wörtern umfasst;
eine Sprachabdrucksegmentierungseinrichtung (250, 450), die so gestaltet ist, dass sie Subsprachinformationen erhält, die jedem Teil der Subtextinformationen entsprechen, durch Segmentieren der Sprachinformationen gemäß der Anfangszeit und der Endzeit der Subtextinformationen; und
einen Sprachabdruckgenerator (130, 230, 330, 430), der so gestaltet ist, dass er jedes Paar der Subsprachinformationen und der entsprechenden Subtextinformationen editiert, indem er für folgende Zwecke gestaltet ist:
Verarbeiten der Subsprachinformationen in entsprechende Subsprachabdruckinformationen, Festlegen eines Dateinamens für die Subsprachabdruckinformationen und Speichern (S26, S34, S44) der Subsprachabdruckinformationen und der Subtextinformationen in Verbindung mit einer Benutzerkennung des ersten Benutzers als einen entsprechenden Teil erster Referenzsprachabdruckinformationen des ersten Benutzers.

5. System (100, 200, 300, 400) nach Anspruch 4, wobei der Sprachabdruckgenerator (130, 230, 330, 430) die Referenzsprachabdruckinformationen in Verbindung mit der Benutzerkennung des ersten Benutzers speichert durch:
Bestimmen, ob zweite Referenzsprachabdruckinformationen in Verbindung mit einer zweiten Benutzerkennung existieren, die der Benutzerkennung des ersten Benutzers entspricht, wobei die zweiten Referenzsprachabdruckinformationen zweite Textinformationen aufweisen, die den Textinformationen in den ersten Referenzsprachabdruckinformationen entsprechen; und
wenn die zweiten Sprachabdruckinformationen nicht existieren, Speichern der ersten Referenzsprachabdruckinformationen in Verbindung mit der Benutzerkennung, ansonsten:
Vergleichen der Qualität der Sprachinformationen in den ersten Referenzsprachabdruckinformationen mit Sprachinformationen in den zweiten Referenzsprachabdruckinformationen, um Sprachinformationen einer höheren Qualität zu bestimmen;
Speichern der Referenzsprachabdruckinformationen mit den Sprachinformationen der höheren Qualität als die ersten Referenzsprachabdruckinformationen in Verbindung mit der Benutzerkennung; und
Löschen der anderen Referenzsprachabdruckinformationen.

6. System (200, 300, 400) nach Anspruch 4 oder 5, ferner umfassend:
eine Sprachabdruckextrahierungseinrichtung (360, 460), die so gestaltet ist, dass sie Referenzsprachabdruckinformationen erfasst, die einem Benutzer eines zu authentifizierenden Benutzers entsprechen;
einen Erkennungsproximitor (370, 470), der so gestaltet ist, dass er Textinformationen in den erfassten Referenzsprachabdruckinformationen ausgibt und als Reaktion darauf zu authentifizierende Sprachinformationen empfängt, die dem ausgegebenen Text entsprechen; und
eine Sprachabdruckabgleicheinrichtung (380, 460), die für folgende Zwecke gestaltet ist:
Abgleichen der Sprachinformationen in den erfassten Referenzsprachabdruckinformationen mit den zu authentifizierenden Sprachinformationen; und
bei erfolgreichem Abgleich, Bestimmen, dass die Authentifizierung des zu authentifizierenden Benutzers erfolgreich ist;
bei fehlgeschlagenem Abgleich, Bestimmen, dass die Authentifizierung des zu authentifizierenden Benutzers fehlschlägt.

## Revendications

1. Procédé de gestion d'informations d'empreinte vocale, comprenant les étapes consistant à :
acquérir (S11, S21, S41, S51) un fichier vocal historique généré par un appel entre un premier utilisateur et un second utilisateur et stocké dans un système ;
exécuter (S12, S22, S42, S52) un traitement de filtrage sur le fichier vocal historique pour obtenir des informations vocales du premier utilisateur ;
exécuter (S13, S23, S43, S53) un traitement de reconnaissance de texte sur les informations vocales pour obtenir des informations textuelles correspondant aux informations vocales ;
segmenter (S24) les informations textuelles en une pluralité d'éléments d'informations sous-textuelles, y compris marquer une heure de début et une heure de fin de chaque élément d'informations sous-textuelles, un élément d'informations sous-textuelles étant une phrase ou une expression comprenant une pluralité de mots ;
obtenir (S25) des informations sous-vocales correspondant à chaque élément des informations sous-textuelles en segmentant les informations vocales en fonction de l'heure de début et de l'heure de fin de chaque élément des informations sous-textuelles ; et
éditer chaque paire des informations sous-vocales et des informations sous-textuelles correspondantes par les étapes consistant à :
traiter les informations sous-vocales en informations de sous-empreinte vocale correspondantes, définir un nom de fichier pour les informations de sous-empreinte vocale, et stocker (S26, S34, S44) les informations de sous-empreinte vocale et les informations sous-textuelles, en association avec un identifiant d'utilisateur du premier utilisateur, comme un élément respectif de premières informations d'empreinte vocale de référence du premier utilisateur.

2. Procédé selon la revendication 1, le stockage (S34) des premières informations d'empreinte vocale de référence en association avec l'identifiant d'utilisateur du premier utilisateur comprenant les étapes consistant à :
déterminer (S31) si des secondes informations d'empreinte vocale de référence existent en association avec un second identifiant d'utilisateur qui est le même que l'identifiant d'utilisateur du premier utilisateur, les secondes informations d'empreinte vocale de référence comprenant des secondes informations textuelles qui sont les mêmes que les informations textuelles dans les premières informations d'empreinte vocale de référence ; et
si les secondes informations d'empreinte vocale de référence n'existent pas, stocker les premières informations d'empreinte vocale de référence en association avec l'identifiant d'utilisateur, sinon :
comparer (S32) la qualité des informations vocales dans les premières informations d'empreinte vocale de référence avec les informations vocales dans les secondes informations d'empreinte vocale de référence pour déterminer des informations vocales d'une qualité supérieure,
stocker (S34) les informations d'empreinte vocale de référence ayant les informations vocales de la qualité supérieure comme les premières informations de référence d'empreinte vocale de référence en association avec l'identifiant d'utilisateur, et
supprimer (S33) les autres informations d'empreinte vocale de référence.

3. Procédé selon la revendication 1 ou 2, comprenant en outre les étapes consistant à :
acquérir (S45, S57) des informations d'empreinte vocale de référence correspondant à un identifiant d'un utilisateur à authentifier ;
transmettre (S46, S58) des informations textuelles dans les informations d'empreinte vocale de référence acquises et, en réponse, recevoir des informations vocales à authentifier correspondant au texte transmis ;
faire correspondre (S47, S59) des informations vocales dans les informations d'empreinte vocale de référence acquises avec les informations vocales à authentifier ; et
si la correspondance réussit, déterminer (S47, S59) que l'authentification de l'utilisateur à authentifier réussit,
sinon déterminer (S47, S59) que l'authentification de l'utilisateur à authentifier échoue.

4. Système de gestion d'informations d'empreinte vocale (100, 200, 300, 400), comprenant :
un filtre vocal (110, 210, 310, 410) conçu pour acquérir un fichier vocal historique stocké dans le système généré par un appel entre un premier utilisateur et un second utilisateur, et exécuter un traitement de filtrage sur le fichier vocal historique pour obtenir des informations vocales du premier utilisateur ;
un dispositif de reconnaissance de texte (120, 220, 320, 420) conçu pour exécuter un traitement de reconnaissance de texte sur les informations vocales pour obtenir des informations textuelles correspondant aux informations vocales ;
un dispositif de segmentation de texte (240, 440), conçu pour segmenter les informations textuelles en une pluralité d'éléments d'informations sous-textuelles et pour marquer une heure de début et une heure de fin de chaque élément des informations sous-textuelles, un élément d'informations sous-textuelles étant une phrase ou une expression comprenant une pluralité de mots ;
un dispositif de segmentation d'empreinte vocale (250, 450) conçu pour obtenir des informations sous-vocales correspondant à chaque élément des informations sous-textuelles en segmentant les informations vocales en fonction de l'heure de début et de l'heure de fin des informations sous-textuelles ; et
un générateur d'empreinte vocale (130, 230, 330, 430) conçu pour, éditer chaque paire des informations sous-vocales et des informations sous-textuelles correspondantes, en étant conçu pour :
traiter les informations sous-vocales en informations de sous-empreinte vocale correspondantes, définir un nom de fichier pour les informations de sous-empreinte vocale, et stocker (S26, S34, S44) les informations de sous-empreinte vocale et les informations sous-textuelles, en association avec un identifiant d'utilisateur du premier utilisateur, comme un élément respectif des premières informations d'empreinte vocale de référence du premier utilisateur.

5. Système (100, 200, 300, 400) selon la revendication 4, le générateur d'empreinte vocale (130, 230, 330, 430) stockant les informations d'empreinte vocale de référence en association avec l'identifiant d'utilisateur du premier utilisateur en :
déterminant si des secondes informations d'empreinte vocale de référence existent en association avec un second identifiant d'utilisateur qui est le même que l'identifiant d'utilisateur du premier utilisateur, les secondes informations d'empreinte vocale de référence comprenant des secondes informations textuelles qui sont les mêmes que les informations textuelles dans les premières informations d'empreinte vocale de référence ; et
si les secondes informations d'empreinte vocale de référence n'existent pas, stocker les premières informations d'empreinte vocale de référence en association avec l'identifiant d'utilisateur, sinon :
comparant la qualité des informations vocales dans les premières informations d'empreinte vocale de référence avec les informations dans les secondes informations d'empreinte vocale de référence pour déterminer des informations vocales d'une qualité supérieure,
stockant les informations d'empreinte vocale de référence ayant des informations vocales de la qualité supérieure comme premières informations d'empreinte vocale de référence en association avec l'identifiant de l'utilisateur, et
supprimant les autres informations d'empreinte vocale de référence.

6. Système (200, 300, 400) selon la revendication 4 ou 5, comprenant en outre :
un extracteur d'empreinte vocale (360, 460) conçu pour acquérir des informations d'empreinte vocale de référence correspondant à un identifiant d'un utilisateur à authentifier ;
un dispositif de proximité de reconnaissance (370, 470) conçu pour transmettre des informations textuelles dans les informations d'empreinte vocale de référence acquises et recevoir, en réponse, des informations vocales à authentifier correspondant au texte transmis ; et
un dispositif de mise en correspondance d'empreinte (380, 460) conçu pour :
faire correspondre des informations vocales dans les informations d'empreinte vocale de référence acquises avec les informations vocales à authentifier,
si la mise en correspondance réussit, déterminer que l'authentification de l'utilisateur à authentifier réussit, et
si la mise en correspondance échoue, déterminer que l'authentification de l'utilisateur à authentifier échoue.
